# EUROPEAN PATENT APPLICATION

(11) **EP 4 206 627 A1**
(43) Date of publication of application: **05.07.2023**
(21) Application number: 21218144.0
(22) Date of filing: 29.12.2021
(51) Int. Cl.: G01J 3/02, G01J 3/52

(54) **A COLOR MEASUREMENT SYSTEM COMPRISING A CALIBRATION PLAQUE**

(71) Applicant: X-Rite, Inc., Grand Rapids MI 49512 (US)
(72) Inventor: Weber, Michael, 8105 Regensdorf (CH)
(74) Representative: Jonas, Hans-Hermann

(57) **Abstract**

A color measurement system comprises calibration plaque and a machine-readable object physically associated with the calibration plaque, the machine-readable object being encoded with spectral reference data corresponding to the calibration plaque. The system further comprises a color measurement instrument including a sensor capable of reading the machine-readable object, where the color measurement instrument is configured with instructions in non-volatile memory that, when executed by a processor on the color measurement instrument, acquires spectral reference data encoded on the machine readable object and decodes the spectral reference data corresponding to the calibration plaque. In some embodiments, the color measurement instrument comprises a spectrophotometer.

## Description

### Background

Spectrophotometers are color measurement instruments capable of highly-precise color measurements. To ensure a high degree of accuracy in the color measurements, spectrophotometers are required to be calibrated from time to time. In some instances, calibration is performed by measuring a white reference calibration tile or plaque having known spectral characteristics.

Due to manufacturing tolerances or other variations for reference plaques, spectrophotometer instruments are typically paired with specific calibration plaques during manufacturing and factory calibration. To ensure accuracy, other calibration plaques ordinarily should not be substituted for the factory-matched plaque. Otherwise, the calibration may be off and loss of accuracy of measurements will occur.

Factory matching of calibration plaques requires users in the field to keep track of the specific calibration plaque to be used with a specific spectrophotometer. Also, users should check that the serial number on the calibration plaque matches a reference serial number displayed on the instrument screen during calibration.

If a calibration plaque becomes damaged or dirty or otherwise unusable, a new calibration plaque would have to be substituted for the factory-matched calibration plaque. However, in this case, the user would have to follow a procedure to obtain a new calibration plaque and upload reference spectral data associated with the new calibration plaque to the instrument. This process for the end user is cumbersome and may introduce errors. Additionally, the user may be required to return their instrument to the factory for re-certification with a new calibration plaque.

### Summary

A color measurement system comprises calibration plaque and a machine-readable object physically associated with the calibration plaque, the machine-readable object being encoded with spectral reference data corresponding to the calibration plaque. The system further comprises a color measurement instrument including a sensor capable of reading the machine-readable object, where the color measurement instrument is configured with instructions in non-volatile memory that, when executed by a processor on the color measurement instrument, acquires spectral reference data encoded on the machine readable object and decodes the spectral reference data corresponding to the calibration plaque. In some embodiments, the color measurement instrument comprises a spectrophotometer.

In some embodiments, the machine-readable object comprises a QR code comprising visible encoded spectral information and the sensor comprises an image sensor of a camera on the color measurement instrument.

In some embodiments, the machine-readable object comprises a wireless radio-frequency device and comprising electronically accessible encoded spectral information. For example, in some embodiments, the wireless radio frequency device comprises a RFID tag and the sensor comprises a RFID reader. In another example, the wireless radio frequency device comprises a NFC chip and the sensor comprises a NFC reader.

### Description

A calibration plaque including machine-readable spectral calibration data associated with the calibration plaque is provided, along with a color measurement instrument capable of reading the machine-readable object and decoding the spectral calibration data. In one example the calibration plaque is for use with a spectrophotometer having a camera or other imaging capabilities.

A spectrophotometer is an example of a color measurement instrument. Many models of spectrophotometers have a camera for obtaining images of objects or surfaces being measured. In some examples, the camera is used for targeting purposes. In other examples, the camera is used to make color measurements. See, for example, PCT US 2018/037333, which is incorporated by reference. In some examples, the camera is included to obtain texture images of target surfaces. See, for example, US 2018/0024005, which is incorporated by reference.

In some embodiments, spectral reference data corresponding to a physical calibration plaque is provided to an encoder. The encoder generates, for example, a bar code or QR-Code. The bar code or QR-Code is printed on a sticker and the sticker affixed next to the calibration plaque. A sticker with a QR-Code, for example, is a machine-readable object. Other information may be encoded as may be required by the calibration process. The QR codes can also hold additional information that may be relevant to the measurement system, for example, a version number, a serial number, and reflectance data for the white calibration plaque.

The color measurement instrument uses its camera to read the bar or QR code. Instructions are stored in the color measurement instrument, when run on a processor in the instrument, decode the spectral reference data. This data may be saved in non-volatile memory by the color measurement instrument prior to performing the calibration spectral reading of the calibration plaque.

In other embodiments, advantageously, any calibration data that the color measurement instrument would require to perform a proper calibration is automatically loaded to the instrument each time a calibration is performed. This reduces error customers might experience and basically makes their workflow simpler and error free. Also, because the spectral reference data is obtained during each calibration procedure, the spectral reference data need not be saved to non-volatile memory. Additionally, this approach allows users to determine if they have an instrument problem or calibration plaque issue if they have more than one calibration plaque in house.

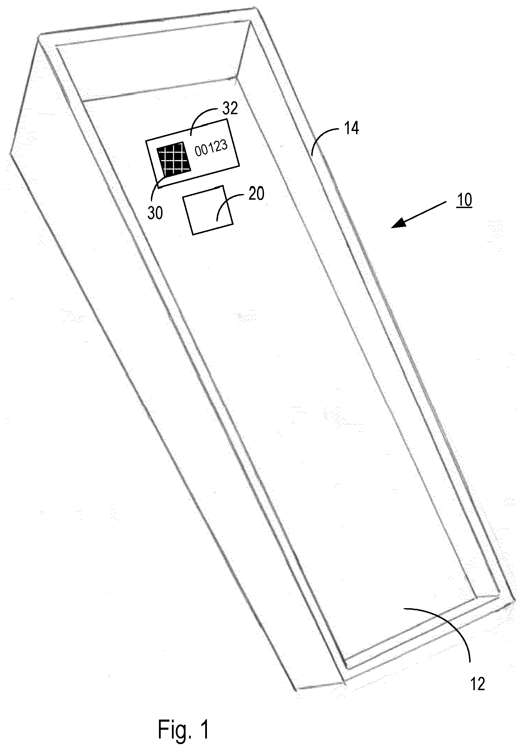

An example of a cradle / docking station including a calibration plaque according to one example of the present invention is illustrated in Figure 1. A calibration cradle 10 comprises a bottom 12 and walls 14. In the bottom is a calibration plaque 20. The calibration plaque 20 may be covered by a movable door such that the calibration plaque 20 is covered when not in use and the door is opened and the calibration plaque 20 revealed when a color measurement instrument is placed in the cradle. The walls 14 and other features, such as a peg, cooperate to retain the color measurement instrument so that the calibration plaque is in the field of view of the color measurement optics of the color measurement instrument. In some embodiments, the cradle may also serve as a charger for the color measurement device, and calibration can occur while recharging.

In some embodiments, spectral calibration data associated with the calibration plaque 20 is encoded into a QR code 30 which is placed adjacent to the calibration plaque 20. The QR code 30 may be printed on a sticker 32. The sticker 32 may also include a serial number for a user to compare with a serial number on the color measurement instrument. The present invention is not limited to stickers; QR code 30 may be disposed adjacent the calibration plaque 20 by any method or means which makes the QR code visible and able to be read by a color measurement instrument.

Other methods to store the calibration data with the calibration plaque could include RFID, NFC or data over the wireless charger connection or other technologies that allow the calibration data to be encoded into with the cradle / docking station / calibration plaque and the instrument is capable of reading the calibration data when it is ready to calibrate. The instrument never needs to be "paired" with a calibration plaque, and the instrument can calibrate on *any* calibration plaque / docking station that can communicate its calibration data to the instrument using some data transfer means.

Color measurement instruments having imaging capabilities may advantageously take advantage of the embodiment illustrated in Figure 1 without any additional hardware.

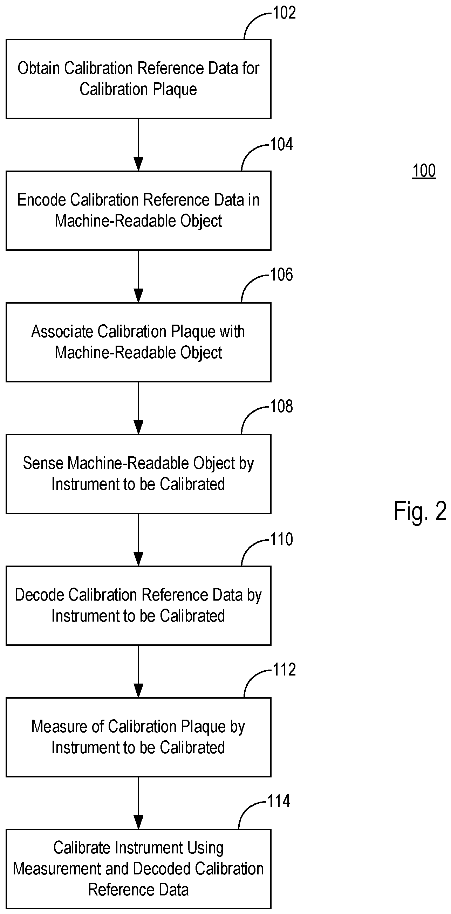

A method of calibrating a color measurement instrument 100 is illustrated in Figure 2. Calibration reference data is obtained for a calibration plaque in step 102. The calibration reference data is encoded into a machine-readable object is step 104. The machine-readable object is physically associated with the calibration plaque in step 106. An instrument to be calibrated senses the machine readable object in step 108 and decodes the calibration reference data in step 110. The instrument measures the calibration plaque in step 112 and the instrument is calibrated using the measurement and the decoded calibration reference data.

The present invention is not limited to the cradle illustrated in Figure 1. For example, if a calibration plaque is not used in combination with a cradle, the machine-readable object may be associated with the calibration plaque in another way, such as being printed on a carrier for the plaque, or on a case or other packaging associated with the plaque.

Embodiments of the present disclosure, for example, include color measurement instruments comprising a special purpose or embedded general-purpose processor including for example, one or more processors and system memory. Embodiments within the scope of the present disclosure also include physical and other computer-readable media for carrying or storing processor-executable instructions and/or data structures. In particular, one or more of the processes or methods described herein may be implemented at least in part as instructions embodied in a non-transitory computer-readable medium and executable by one or more processing devices (e.g., any of the media content access devices described herein). In general, a processor (e.g., a microprocessor) receives instructions, from a non-transitory computer-readable medium, (e.g., a memory, etc.), and executes those instructions, thereby performing one or more processes or methods, including one or more of the processes or methods described herein.

Such devices also may include a computer-readable storage media reader, a communications device (e.g., a modem, a network card (wireless or wired), an infrared communication device, etc.), and working memory as described above. The computer-readable storage media reader may be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices may also include one or more software applications, modules including program modules, services, or other elements located within at least one working memory device, including an operating system and application programs, such as a client application or Web browser. It should be appreciated that alternate embodiments may have numerous variations from that described above. For example, customized hardware might also be utilized and/or particular elements might be implemented in hardware, software (including portable software, such as applets), or both. Further, connection to other computing devices such as network input/output devices may be employed.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes ROM, EEPROM, CD-ROM, solid state drives ("SSDs") (e.g., based on RAM), Flash memory, phase-change memory ("PCM'), other types of memory, other optical disk storage, magnetic disk storage or other magnetic storage devices, or any other medium which can be used to store desired program code means in the form of computer-executable instructions or data structures and which can be accessed by a general purpose or special purpose computer.

A digital communication interface, or network, is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed at a processor, cause a general-purpose computer, special purpose computer, or special purpose processing device to perform a certain function or group of functions. In some embodiments, computer-executable instructions are executed on a general-purpose computer to turn the general-purpose computer into a special purpose computer implementing elements of the disclosure. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

In the foregoing specification, the invention has been described with reference to specific exemplary embodiments thereof. Various embodiments and aspects of the invention(s) are described with reference to details discussed herein, and the accompanying drawings illustrate the various embodiments. The description above and drawings are illustrative of the invention and are not to be construed as limiting the invention. Numerous specific details are described to provide a thorough understanding of various embodiments of the present invention.

The present invention may be embodied in other specific forms without departing from its spirit or essential characteristics. The described embodiments are to be considered in all respects only as illustrative and not restrictive. For example, the methods described herein may be performed with less or more steps/acts or the steps/acts may be performed in differing orders. Additionally, the steps/acts described herein may be repeated or performed in parallel with one another or in parallel with different instances of the same or similar steps/acts. The scope of the invention is, therefore, indicated by the appended claims rather than by the foregoing description. All changes that come within the meaning and range of equivalency of the claims are to be embraced within their scope.

## Claims

1. A color measurement system comprising:
a calibration plaque;
a machine-readable object physically associated with the calibration plaque, the machine-readable object being encoded with spectral reference data corresponding to the calibration plaque; and
a color measurement instrument including a sensor capable of reading the machine-readable object, where the color measurement instrument is configured with instructions in non-volatile memory that, when executed by a processor on the color measurement instrument, acquires spectral reference data encoded on the machine readable object and decodes the spectral reference data corresponding to the calibration plaque.

2. The system of claim 1, wherein the machine-readable object comprises a QR code comprising visible encoded spectral information and the sensor comprises an image sensor of a camera on the color measurement instrument.

3. The system of claim 2, wherein the color measurement instrument comprises a spectrophotometer.

4. The system of claim 1, wherein the machine-readable object comprises a wireless radio-frequency device and comprising electronically accessible encoded spectral information.

5. The system of claim 4, wherein the wireless radio frequency device comprises a RFID tag and the sensor comprises a RFID reader.

6. The system of claim 4, wherein the wireless radio frequency device comprises a NFC chip and the sensor comprises a NFC reader.
